# EUROPEAN PATENT SPECIFICATION

(11) **EP 0 800 994 B1**
(45) Date of publication and mention of the grant of the patent: **19.07.2000**
(21) Application number: 97500059.7
(22) Date of filing: 26.03.1997
(51) Int. Cl.: B65B 61/18

(54) **Process for the application of closing pieces for bags during their continuous process manufacturing**
Verfahren zur Befestigung von Verschlüssen an Beuteln während ihrer kontinuierlichen Herstellung
Procédé de fixation de pièces de fermeture à des sacs pendant leur fabrication en continu

(30) Priority: 11.04.1996 ES 9600827
(43) Date of publication of application: 15.10.1997
(73) Proprietor: VOLPAK, S.A., E-08130 Santa Perpetua de Mogoda (ES)
(72) Inventor: Marti Roche, Enric, 08017 Barcelona (ES); Fite Sala, Mena, 08130 Santa Perpetua de Mogoda (ES)
(74) Representative: SUGRANES - VERDONCES - FERREGÜELA

(56) References cited:
- FR-A- 2 715 636
- GB-A- 2 241 487
- US-A- 4 512 136

## Description

### Technical field of the invention

The object of the invention is a process for the application of closing pieces for bags during the continuous-process manufacturing of same, applicable in general to automatic packaging machines whose structure has a built-in device for continuous-process forming of bag-shaped packaging, using a sheet of flexible thermoweldable material. More particularly, the process of the invention is applicable to automatic packaging machines for liquid food products such as fruit juices and granulated, ground or powdered foods.

### Background of the invention

Known in the art are many embodiments of automatic packaging machines which essentially incorporate into their structures a device for continuous-process formation of bag-shaped packages and a filling device arranged longitudinally and operating synchronically in continuous process. Such bags are generally made from a sheet rolled onto a drum, composed for example of a plurality of layers of paper and thermoweldable plastic material, basically presenting an essentially quadrangular format and relatively low thickness. Within the overall set of operations which the continuous-process forming device implements, there is a first phase in which the sheet of flexible material adopts a general "U" shape, a plurality of successive phases of bag forming as such, in which the bottom and side sections are thermowelded and, once the bag has been filled by filling with the product it is to contain, the bag is closed by welding of its top side. Under these conditions, in order to gain access for consumption of the product contained in the bag users have to use a cutting tool to make an opening for pouring.

In those cases in which the product contained in the bag is consumed in doses over a period of time which can be comparatively long, the bag generally requires a closing piece to preserve said product from the action of the environment. Such closing pieces include, amongst others, screw-threaded and pressure-fitted caps, dispensing devices, opening pieces using a cut functioning as spout, etc. In all these cases, the closing piece includes at least a closing body fixed by means of welding or by any other means to the bag, generally at one of its vertices.

Until the present time, the application of said closing pieces to bags such as those described above was carried out manually or by using applicator devices; in either case, that is, with manual application of closing pieces and with the known embodiments of applicator mechanisms for such devices, the main disadvantage was that they had low production capacity, which increased the costs deriving from product packaging.

A method according to the preamble of appended claim 1 is disclosed for instance by the patent document US 4 512 136. This document discloses fitment attachment methods in horizontal form/fill/seal machines in which a fitment is connected to a bottom fold of bag by means of a fitment applying station which comprises: a fitment supply track, an axially movable anvil, two suction cups and a fitment sealing element which operate coordinately. The fitment supply track is provided under the bag and the fitment sealing element is provided above said bag. The welding of the fitment to the bottom fold of the bag is carried out by sliding the fitment sealing element inside the bag.

### Explanation of the invention

In order to provide a solution for the above-mentioned disadvantages presented by the known embodiments of closing device applicators such as those described above, a process is made known hereby for the application of closing pieces for bags during the continuous-process manufacturing of same.

The process of the invention for the application of closing pieces is applicable to automatic packaging machines which have a continuous-process forming device for packages in the form of bags made from a sheet of flexible thermoweldable material, said bags being formed by bending the sheet into a "U" shape to form two equal side walls facing and running parallel to each other at a relatively short distance one from the other.

The process for application of closing pieces of the invention is characterized in that it includes the following phases:
- in a first phase, the lower longitudinal end of the facing walls is welded to form a bag bottom;
- in a second phase, the upper longitudinal ends of the facing walls are welded over a portion of relatively short length superimposed on one of the longitudinal ends of the bag bottom;
- in a third phase, two cuts are made in both facing walls starting at their top edges, one vertical cut and one inclined cut which extends as far as the lower edge of the vertical cut, leaving the welded portions of the upper longitudinal ends between the vertical and inclined cuts;
- in a fourth phase, said welded portions are removed from the upper longitudinal ends, forming on both facing walls a corresponding incut, the inclined cuts leaving inclined portions of the upper longitudinal ends;
- in a fifth phase, the upper longitudinal ends are separated;
- in a sixth phase, a closing piece is fitted perpendicularly between the inclined portions of the upper longitudinal ends;
- in a seventh phase, the inclined portions of the upper longitudinal ends are welded onto relatively short portions on either side of the closing piece, fixing it into position;
- in an eighth phase, the inclined portions of the upper longitudinal ends are welded along their entire length to the closing piece; and
- in a ninth phase, the facing walls are welded by means of a vertical welding strip which links the equal ends of the upper longitudinal ends and bottom to form closed bag lateral sides and leave the top side open.

According to another characteristic of the process of the invention for the application of closing pieces, the vertical and inclined cuts on both facing walls are made simultaneously by die-cutting.

According to another characteristic of the process of the invention for the application of closing pieces, the welded portions of the upper longitudinal ends are removed by suction.

According to another characteristic of the process of the invention for the application of closing pieces, the upper longitudinal ends are separated by means of a separator fitted between the two walls.

According to another characteristic of the process of the invention for the application of closing pieces, the fitting of the closing pieces perpendicularly between the inclined portions of the upper longitudinal ends is implemented by means of an inserting device.

According to another characteristic of the process of the invention for the application of closing pieces, the inserting device includes a positioning-loading mechanism and a rotary inserting mechanism.

According to another characteristic of the process of the invention for the application of closing pieces, the inserting device includes a positioning-loading mechanism and a linear inserting mechanism.

### Brief description of the drawings

The drawing sheets of this specification show the process of the invention for application of closing pieces for bags during the continuous-process manufacturing of such bags. In said drawings:
Figure 1 is a schematic view of a first mode of embodiment of the process of the invention;
Figure 2 is a schematic view of the separation of the facing walls prior to fitting the closing piece between them, according to the process of the invention;
Figure 3 is a schematic view of the closing piece position fixing according to the process of the invention;
Figure 4 is a schematic view of the welding of the closing piece to the facing walls according to the process of the invention; and
Figure 5 is a schematic view of another mode of embodiment of the process of the invention.

### Detailed description of the example of embodiment

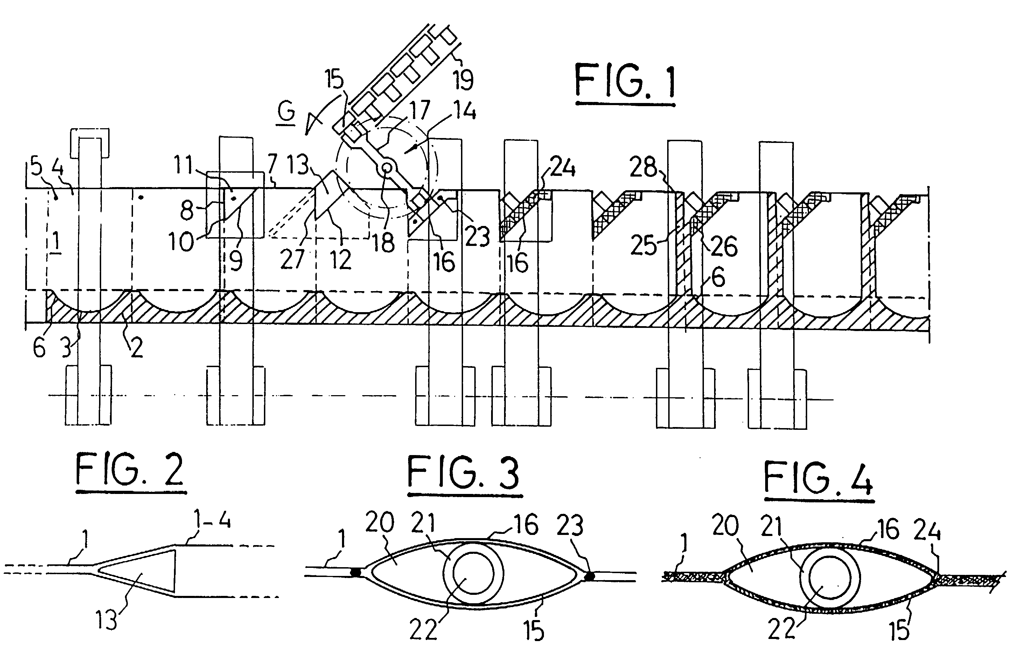

The process of the invention for the application of closing pieces for bags during their continuous-process manufacturing is shown schematically in Figure 1. For the purposes of achieving suitable clarity of outline, said Figure 1 does not show those known parts of a continuous-process forming device for packages in the form of bags, and which play a part in the forming of bags from a flexible sheet of thermoweldable material bent into a "U" shape. In this way, Figures 1 and 2 show how the bending of said flexible sheet of thermoweldable material forms two equal walls 1 facing each other, running parallel to and at a relatively short distance from each other.

In the first phase of the process of the invention, the lower longitudinal end 2 of the facing walls 1 are welded without breaks over a width corresponding to that of a bag, forming the bottom 3 of same which, in this example of embodiment, has a curved circumference outline; it is understood that said bottom 3 can be horizontal or can present any other type of curvature suited to each specific case of application.

Afterwards, in the second phase of the process of the invention, the upper longitudinal end 4 of the facing walls 1 is joined by means of a welded piece 5 superimposed upon one end, the back end 6, of the bottom 3.

Afterwards, in the third phase of the process of the invention, two cuts are made by die-cutting at the upper edge 7 of the upper longitudinal ends 4: a first vertical cut 8 which delimits one side edge bag portion; and a second inclined cut 9 which extends as far as the lower edge 10 of the vertical cut 8.

Afterwards, in the fourth phase of the process of the invention, and simultaneously with the above die-cutting operation, the welded portions 11 of the upper longitudinal ends 4 are removed by suction, preferably by means of a sucker, forming an incut 12 of general "V" shape in each facing wall 1.

Afterwards, in the fifth phase of the process of the invention, and as shown in Figures 1 and 2, the upper longitudinal ends 4 are separated by means of a separating device 13 fitted between them, which device, as shown schematically in Figure 2, separates the two upper longitudinal ends 4 symmetrically with respect to the theoretical main longitudinal axis of the sheet bent in a "U" shape.

Afterwards, in the sixth phase of the process of the invention, the closing piece 15 is placed by means of an inserting device 14 between the inclined portions 16 of the upper longitudinal ends 4. The inserting device 14 shown schematically is rotary and essentially consists of two arms 17 which can rotate in the direction marked G around a pivot 18, where each arm 17 during its rotation transports a closing piece 15 from a loading-positioning device 19 to between the said inclined portions 16. At this point it should be stated that the closing piece 15 can adopt any configuration and closing arrangement suited to each case of application, while, specifically, the closing piece 15 has to be adapted to the product which the bag is to contain; the closing piece 15 can thus include a pressure-fitted or screw-threaded cap, a metering device, etc. In this example of embodiment of the process of the invention, the closing piece 15 consists, as shown in Figures 1, 3 and 4, of a closing body 20 of elliptical cross section upon which there is a centrally mounted cylindrical extension 21 provided with a centred passage 22, said extension 21 being fittable with a closing piece, such as a pressure-fitted metering device, not shown.

Afterwards, in the seventh phase of the process of the invention, the inclined portions 16 of the upper longitudinal ends 4 are joined by two welded sections 23 to both sides of the closing piece 15, at a relatively short distance from it, as shown in Figure 3, in such a way that the position of the closing piece 15 is fixed.

Afterwards, in the eighth phase of the process of the invention, a welded section 24 is made to join the inclined portions 16 with the closing piece 15, said welded section 24 extending, as shown in Figures 1 and 4, from the upper edge 7 to the lower edge 10 of the vertical cut 8 made in the third phase of the process.

Afterwards, in the ninth phase of the process of the invention, the facing walls 1 are welded by means a vertical welded strip 25 which links the similar ends 6 of the bottom 3, 26 of the welded inclined portion 16 and 28 of the upper longitudinal ends 4, forming a closed bag side.

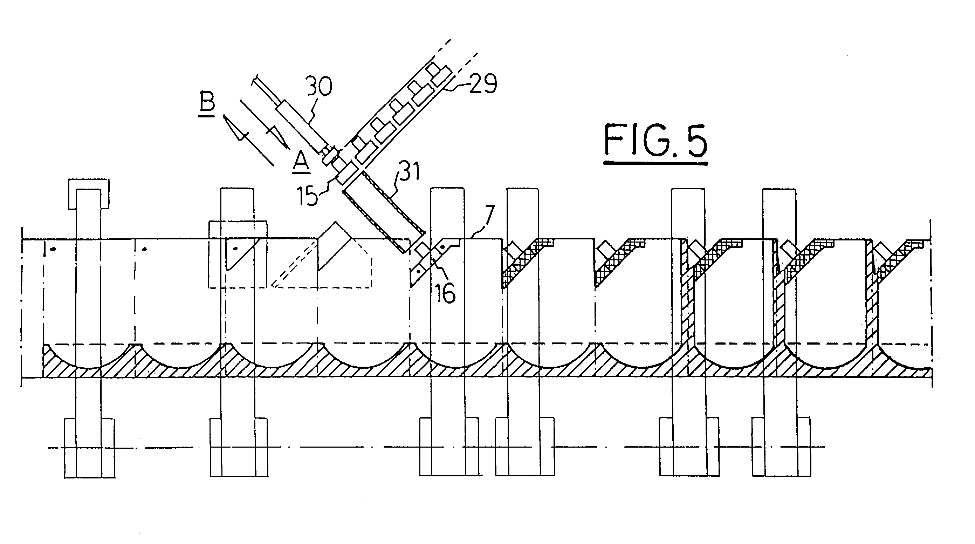

The application process for closing parts for bags during their continuous-process manufacturing shown schematically in Figure 5 differs from that described above only in as relates to the inserting device 14, for which reason, for the purposes of greater clarity of outline, Figure 5 does not include all those reference numbers pertaining to parts common to both modes of embodiment. This inserting device 14 comprises a loading-positioning mechanism 29 and a cylinder 30 arranged to form a certain angle with respect to the upper edge 7 of the longitudinal ends 4 of the facing walls 1. Moving lineally in the direction marked A, the cylinder 30 transports a closing piece 15 from the loading-positioning mechanism 29 to between the inclined portions 16 through a guiding body 31, while by making a movement B in the opposite direction to the previous one, the cylinder 30 is left ready to transport another closing piece 15 in the way described above.

## Claims

1. A process for the application of closing pieces for bags during their continuous-process manufacturing, applicable to automatic packaging machines which have a continuous-process forming device for packages in the form of bags made from a sheet of flexible thermoweldable material, said bags being formed by bending the sheet into a "U" shape to form two equal side walls (1) facing and running parallel to each other at a relatively short distance one from the other, which is characterized in that it includes the following phases:
- in a first phase, the lower longitudinal end (2) of the facing walls (1) is welded to form a bag bottom (3);
- in a second phase, the upper longitudinal ends (4) of the facing walls (1) are welded over a portion (5) of relatively short length superimposed on one of the longitudinal ends (6) of the bag bottom (3);
- in a third phase, two cuts are made in both facing walls (1) starting at their top edges (7), one vertical cut (8) and one inclined cut (9) which extends as far as the lower edge (10) of the vertical cut (8), leaving the welded portions (11) of the upper longitudinal ends (4) between the vertical (8) and inclined (9) cuts;
- in a fourth phase, said welded portions (11) are removed from the upper longitudinal ends (4), forming on both facing walls (1) a corresponding incut (12), the inclined cuts (9) leaving inclined portions (16) on the upper longitudinal ends (4);
- in a fifth phase, the upper longitudinal ends (4) are separated;
- in a sixth phase, a closing piece (15) is fitted perpendicularly between the inclined portions (16) of the upper longitudinal ends (4);
- in a seventh phase, the inclined portions (16) of the upper longitudinal ends (4) are welded onto relatively short portions (23) on either side of the closing piece (15), fixing it into position;
- in an eighth phase, the inclined portions (16) of the upper longitudinal ends (4) are welded (24) along their entire length to the closing piece (15); and
- in a ninth phase, the facing walls (1) are welded by means of a vertical welding strip (25) which links the equal ends (28, 26, 6) of the upper longitudinal ends (4) and bottom (3) to form closed bag lateral sides and leave the top side open.

2. A process for the application of closing pieces as claimed in Claim 1, characterized in that the vertical (8) and inclined (9) cuts on both facing walls (1) are made simultaneously by die-cutting.

3. A process for the application of closing pieces as claimed in Claims 1 and 2, characterized in that the welded portions (11) of the upper longitudinal ends (4) are removed by suction.

4. A process for the application of closing pieces as claimed in Claims 1 to 3, characterized in that the upper longitudinal ends (4) are separated by means of a separator (13) fitted between the two walls (1).

5. A process for the application of closing pieces as claimed in Claims 1 to 4, characterized in that the fitting of the closing pieces (15) perpendicularly between the inclined portions (16) of the upper longitudinal ends (4) is implemented by means of an inserting device (14).

6. A process for the application of closing pieces as claimed in Claim 5, characterized in that the inserting device includes (14) a positioning-loading mechanism (19) and a rotary inserting mechanism (17, 18).

7. A process for the application of closing pieces as claimed in Claim 5, characterized in that the inserting device (14) includes a positioning-loading mechanism (29) and a linear inserting mechanism (30, 31).

## Patentansprüche

1. Verfahren zum Befestigen bzw. Applizieren von Verschlußstücken für Tüten bzw. Beutel während deren Herstellung im kontinuierlichen Verfahren, das bei automatischen Verpackungsmaschinen anwendbar ist, die eine in einem kontinuierlichen Verfahren arbeitende Formungseinrichtung für Verpackungen in Form von Tüten bzw. Beuteln aufweisen, die aus einer Lage bzw. Folie aus flexiblem thermisch schweißbarem Material bestehen, welche Tüten durch Biegen bzw. Falten der Lage in eine "U"-Form ausgebildet werden, um zwei gleiche Seitenwände (1) auszubilden, die eine von der anderen einander gegenüberliegen und parallel zueinander verlaufen, welches Verfahren dadurch gekennzeichnet ist, daß es die folgenden Abschnitte umfaßt:
- in einem ersten Abschnitt wird das untere Längsende (2) der Seitenwände (1) verschweißt, um einen Tütenboden (3) auszubilden;
- in einem zweiten Abschnitt werden die oberen Längsenden (4) der Seitenwände (1) über einem Abschnitt (5) von vergleichsweise geringer Länge verschweißt, der auf eines der Längsenden (6) des Tütenbodens (3) aufgebracht ist;
- in einem dritten Abschnitt werden in beiden Seitenwänden (1), beginnend an deren oberen Rändern (7), zwei Schnitte gemacht, ein vertikaler Schnitt (8) und ein schräger Schnitt (9), der sich bis zum unteren Rand (10) des vertikalen Schnitts (8) erstreckt, so daß die verschweißten Abschnitte (11) der oberen Längsenden (4) zwischen dem vertikalen (8) und schrägen (9) Schnitt verbleiben;
- in einem vierten Abschnitt werden die verschweißten Abschnitte (11) von den oberen Längsenden (4) entfernt, so daß auf beiden Seitenwänden (1) ein entsprechender Einschnitt (12) ausgebildet ist, wobei die schrägen Schnitte (9) schräge Abschnitte (16) auf den oberen Längsenden (4) zurücklassen;
- in einem fünften Abschnitt werden die oberen Längsenden (4) getrennt;
- in einem sechsten Abschnitt wird ein Verschlußstück (15) senkrecht zwischen die schrägen Abschnitte (16) der oberen Längsenden (4) eingepaßt;
- in einem siebten Abschnitt werden die schrägen Abschnitte (16) der oberen Längsenden (4) auf vergleichsweise kurze Abschnitte (23) zu beiden Seiten des Verschlußstücks (15) aufgeschweißt, so daß dieses in seiner Position fixiert wird;
- in einem achten Abschnitt werden die schrägen Abschnitte (16) der oberen Längsenden (4) entlang ihrer gesamten Länge an das Verschlußstück (15) geschweißt (24); und
- in einem neunten Abschnitt werden die Seitenwände (1) mit Hilfe eines vertikalen Schweißstreifens (25) verschweißt, der die gleichen Enden (28, 26, 6) der oberen Längsenden (4) und den Boden (3) verbindet, um Seitenwände einer geschlossenen Tüte auszubilden und die obere Seite offen zu lassen.

2. Verfahren zum Befestigen von Verschlußstücken nach Anspruch 1, dadurch gekennzeichnet, daß die vertikalen (8) und schrägen (9) Schnitte auf beiden Seitenwänden (1) gleichzeitig durch Stanzen hergestellt werden.

3. Verfahren zum Befestigen von Verschlußstücken nach Anspruch 1 und 2, dadurch gekennzeichnet, daß die verschweißten Abschnitte in (11) der oberen Längsenden (4) durch Absaugen entfernt werden.

4. Verfahren zum Befestigen von Verschlußstücken nach den Ansprüchen 1 bis 3, dadurch gekennzeichnet, daß die oberen Längsenden (4) mit Hilfe eines Trennstücks (13) getrennt werden, das zwischen die zwei Wände (1) eingepaßt ist.

5. Verfahren zum Befestigen von Verschlußstücken nach den Ansprüchen 1 bis 4, dadurch gekennzeichnet, daß das Einpassen der Verschlußstücke (15) senkrecht zwischen die schrägen Abschnitte (16) der oberen Längsenden (4) mit Hilfe einer Einsetzeinrichtung (14) realisiert wird.

6. Verfahren zum Befestigen von Verschlußstücken nach Anspruch 5, dadurch gekennzeichnet, daß die Einsetzeinrichtung einen Positionierung-Beschickungsmechanismus (19) und eine Karussell- bzw. Dreheinsetzeinrichtung (17, 18) umfaßt.

7. Verfahren zum Befestigen von Verschlußstücken nach Anspruch 5, dadurch gekennzeichnet, daß die Einsetzeinrichtung (14) einen Positionierungs-Beschickungsmechanismus (29) und einen linearen Einsetzmechanismus (30, 31) umfaßt.

## Revendications

1. Procédé d'application de pièces de fermeture de sacs, pendant leur processus de production continu, applicable à des machines de conditionnement automatique qui présentent un dispositif de formage en continu pour emballages prenant la forme de sacs faits d'une feuille de matière souple thermosoudable, les sacs étant mis en forme par pliage de la feuille pour lui faire prendre une conformation en forme de U, de façon à former deux parois latérales égales (1) se faisant face et parallèles l'une à l'autre à une distance relativement courte l'une de l'autre, procédé caractérisé en ce qu'il comprend les phases suivantes :
- au cours d'une première phase, l'extrémité longitudinale inférieure (2) des parois (1) se faisant face est soudée de façon à former un fond de sac (3);
- au cours d'une deuxième phase, les extrémités longitudinales supérieures (4) des parois (1) se faisant face sont soudées sur une portion (5) de longueur relativement courte superposée à l'une des extrémités longitudinales (6) du fond de sac (3);
- au cours d'une troisième phase, deux coupes sont faites dans les deux parois (1) se faisant face, en partant de leurs bords supérieurs (7), une coupe verticale (8) et une coupe inclinée (9) qui s'étend aussi loin que le bord inférieur (10) de la coupe verticale (8), laissant les portions soudées (11) des extrémités longitudinales supérieures (4) entre les coupes verticale (8) et inclinée (9);
- dans une quatrième phase, les portions soudées (11) sont enlevées des extrémités longitudinales supérieures (4), en formant sur les parois (1) se faisant face, une dentelure (12) correspondante, les coupes inclinées (9) laissant des portions inclinées (16) sur les extrémités longitudinales supérieures (4);
- dans une cinquième phase, les extrémités longitudinales supérieures (4) sont séparées;
- dans une sixième phase, une pièce de fermeture (15) est engagée perpendiculairement entre les portions inclinées (16) des extrémités longitudinales supérieures (4);
- dans une septième phase, les portions inclinées (16) des extrémités longitudinales supérieures (4) sont soudées sur des portions (23) relativement courtes, de part et d'autre de la pièce de fermeture (15), en fixant cette dernière en position;
- dans une huitième phase, les portions inclinées (16) des extrémités longitudinales supérieures (4) sont soudées (24), sur toute leur longueur, à la pièce de fermeture (15); et
- au cours d'une neuvième phase, les parois (1) se faisant face sont soudées par une bande de soudure verticale (25) qui relie les extrémités égales (28, 26, 6) des extrémités longitudinales supérieures (4) et le fond (3) pour former des parois latérales fermées du sac et laisser le côté supérieur ouvert.

2. Procédé d'application de pièces de fermeture selon la revendication 1, caractérisé en ce que les coupes verticale (8) et inclinée (9) pratiquées sur les deux parois (1) se faisant face sont faites en même temps, par découpage à l'emporte-pièce.

3. Procédé d'application de pièces de fermeture selon les revendications 1 et 2, caractérisé en ce que les portions soudées (11) des extrémités longitudinales supérieures (4) sont enlevées par effet d'aspiration.

4. Procédé d'application de pièces de fermeture selon les revendications 1 à 3, caractérisé en ce que les extrémités longitudinales supérieures (4) sont séparées par un séparateur (13) introduit entre les deux parois (1).

5. Procédé d'application de pièces de fermeture selon les revendications 1 à 4, caractérisé en ce que le positionnement des pièces de fermeture (15), perpendiculairement, entre les portions inclinées (16) des extrémités longitudinales supérieures (4) est effectué par un dispositif d'insertion (14).

6. Procédé d'application de pièces de fermeture selon la revendication 5, caractérisé en ce que le dispositif d'insertion (14) comprend un mécanisme de positionnement-chargement (19) et un mécanisme d'insertion rotatif (17, 18).

7. Procédé d'application de pièces de fermeture selon la revendication 5, caractérisé en ce que le dispositif d'insertion (14) comprend un mécanisme de positionnement-chargement (29) et un mécanisme d'insertion linéaire (30, 31).
